# EUROPEAN PATENT APPLICATION

(11) **EP 3 974 480 A1**
(43) Date of publication of application: **30.03.2022**
(21) Application number: 20197896.2
(22) Date of filing: 23.09.2020
(51) Int. Cl.: C09D 5/14, C09D 5/02, C09D 7/63, C09D 7/45

(54) **ANTIMICROBIAL AQUEOUS COATINGS AND SEALANTS**

(71) Applicant: Chemical Intelligence Limited, Harston Cambridge CB22 7QJ (GB)
(72) Inventor: GROS, Robert, Harston, Cambridge CB22 7QJ (GB); WILKINSON, Mark, Harston, Cambridge CB22 7QJ (GB)
(74) Representative: HGF

(57) **Abstract**

An antimicrobial aqueous sealant, sizing, coating or varnish product comprising:
a) 0.5 to 10wt% aryl or alkyl sulfonate anionic surfactant, preferably 2.5 to 8.5wt%
and
b) 0.1 to 1wt% biocide.

## Description

### FIELD OF INVENTION

The present invention relates to an antimicrobial aqueous sealant, sizing, coating or varnish, use thereof, and method of manufacture thereof.

### BACKGROUND ART

Mechanically produced packaging has been coupled with printing technology for more than one hundred years. As new technology has emerged, modern packaging, printed material and pulp based mediums are now sealed with a clear varnish or sealant. The concept of the sealant is to seal any ink to the surface of printed medium. Most inks have a low threshold for being rubbed off or smudged. They are also susceptible to moisture and have limited luminescence. A sealing coat prevents the ink from being rubbed off, reduces smudging, and helps brighten the appearance of the inks. Sealants are typically (but not exclusively) applied post print production.

WO2013083593 describes an antimicrobial composition of thymol and surfactants for oral care compositions. The surfactants are present at high levels (30 to 80 wt %).

US20130029884 describes a combination of surfactants and biocides for oil and gas drilling. High levels of surfactant and biocide are used (ca. 30 wt % and ca. 10 wt % respectively).

WO2008085446 describes antimicrobial compositions of at least three agents including phenols.

WO2006014446 claims antimicrobial sizing for paper using biocides.

### SUMMARY OF THE INVENTION

The present invention involves constituents that can be added to sealants, coatings and varnishes primarily for use in printing, in order to render these mediums antimicrobial post application.

The present invention provides an antimicrobial aqueous sealant, sizing, coating or varnish comprising:
a) 0.5 to 10wt% aryl or alkyl sulfonate anionic surfactant, preferably 2.5 to 8.5wt%
   and
b) 0.1 to 1wt% biocide.

The present invention also provides uses of the product for general and medical packaging, as well as items such a bank notes and currency.

The present invention further provides a process for producing an antimicrobial water based (aqueous) sealant, sizing, coating or varnish of the present invention, wherein an aryl or alky sulfonate anionic surfactant is slurried in water prior to dissolution.

When biocides are incorporated into print coatings, they often have very low activity, typically no activity. They are bound into the matrix of the coating, and not able to express their action at the surface. The present invention has realised that certain surfactants are able to act in combination with biocides to enable the biocides to be active at the surface, thus rendering such coated surfaces antimicrobial.

### DETAILED DESCRIPTION OF THE INVENTION

There are two distinct types of sealant: hydrocarbon oil phase, or aqueous (water) phase. Both are focused on treating the paper or packaging board for the purpose of protecting the surface of the paper or board prior to, or post printing. The printing process is a method of placing ink on to a surface. The use of a sealant or varnish placed on a printed surface is designed to fulfil a number of purposes. For example, it may increase the speed of printing to allow for the sheets to be printed on both sides to improve the finish of the printed medium and to protect the ink from rub off or smudging.

The present invention provides a novel method of incorporating antimicrobial compounds into existing coatings sealants, inks, coatings and varnishes used in commercial procedures for coating printed products. The unique method of formulation can reduce colonisation of micro-organisms. In certain applications this may help prevent the spread of microbial contamination and infections. In addition, a process for realising such coatings is disclosed.

The preferred alkyl sulfate surfactant of the present invention is sodium lauryl sulfate. The preferred aryl sulfonate surfactant of the present invention is sodium dodecylbenzene sulfonate.

A large number of biocides were assessed for their possible use in sizings or sealants that could engender the pulp, paper and card product or packaging with antimicrobial capabilities. Many biocides screened in isolation gave very low activity. Combinations of different biocides gave similar results. It was only when additional aryl or alky sulfonate anionic surfactants were included in the formulation that effective antimicrobial activity was recorded. Without wishing to be bound by theory, it is believed this is because these surfactants interact with the surface of the coating, enabling the biocides to be presented at the outside of the coating, and thus be active.

Preferred biocides of the present invention may comprise a chlorinated phenol type biocide, preferably chlorocresol, para-chloro-meta-xylenol or 5-chloro-2-(4-chlorophenoxy)-phenol(DCPP). Additional or alternative preferred biocides of the present invention include an isothiazolinone derivative, preferably MIT (methylisothiazolinone) or CMIT (chloromethylisothiazolinone).

The antimicrobial formulation of the present invention may further incorporate an aliphatic alcohol substituted with an aryl moiety, preferably phenoxyethanol.

The sealant (coating) has unique applications within the design criteria of print sealing. They relate to reducing the potential for any printed or prepared surface to hold a microbial loading, provide technical advancement in the concept of printed mediums and in specific applications provide unique practical advancement in infection control utilising packaging rather than mechanical intervention therefore reducing expensive and impracticable processes to achieve hygienic environments. The coating process will render a surface free of microbiological contamination including bacteria and viruses. The coating systems of the present invention are able to provide excellent protection against a wide range of contaminants in addition to being an effective barrier against blood-borne and aspirated pathogens.

The present invention find can be used in a number of areas such as packaging, medical and general. Medical packaging preferably includes any of card medium, box packaging, packaging, laminate packaging, paper products, stationery, note pads, medical equipment packaging, medical note paper, prescriptions, pulp screens, consumables or dry paper towels. General packaging preferably includes any of brochures, catalogues, posters, point of sale, flyers, business cards or reports. The present invention can also be used for bank notes or currency.

As with conventional print coatings, inks and sealants, the present invention has been assessed to match or improve existing physical protection of the printed surface. The unique additional benefits are also supplemented by providing highly effective barrier protection and resistance. The key benefit is that it provides permanent protection of the product that had previously been unattainable with the conventional commercial processes and products. The principle behind the coating is to provide a microbial barrier between the external environment and the packaging, thereby further protecting the contents and the packages surface from contamination.

Antimicrobial agents are incorporated into the coating, sizing, sealant or varnish and transferred on to the pulp surface structure and/or print medium via existing commercially practiced methods. This may be (but not exclusively) to block printing, colour printing, etching, flexography, letterpress printing, lineography, photochromic, lithography using MeV ions - Proton beam writing, four-color lithographic press, Rotogravure, Seri lithograph, Stencil lithography, but may also be represented by other methods including Typography. Addition processes may include pre-coating the paper or pulp mediums.

The present invention has developed a process that incorporates a synergistic mixture of biocidal agents into the coating by adding a specially formulated mixture of biocides. It is important that whatever is added does not interfere with the coating manufacturing process, or with the end use of the coating.

The present invention realises that the combination of certain surfactants with biocides potentiates the activity of the biocides in coatings. However, dissolution of the surfactants can be challenging. When directly dispersed into the coating the solid surfactants can clump into agglomerates coated with the sealant, which can be very hard to break up and dissolve. Solutions of surfactants can be used, but these can lead to the introduction of excessive amounts of water into the coating, which hinder drying. The present invention realises that slurrying the surfactants in a minimum amount of water enables their subsequent rapid dispersion in coatings without significant impact on drying speed.

Overall, the present invention has surprisingly realised that only low concentrations or amounts of the components, i.e. surfactant and biocide, are required.

The following examples are intended to be illustrative or our invention, but in no way limiting. Alternative presentations may be apparent to those skilled in the art, but these will be limited by the scope of our claims.

### EXAMPLES

### Example 1

Sodium dodecylbenzenesulfonate [SDBS] (0.25 g) was slurried in water (1 g), then a commercial water based acrylic sealer added (5.4 g) [WBC1100, Ultrachem, UK] and the mixture stirred until the SDBS dissolved. Phenoxyethanol (35 mgs) was added, followed by para-chloro-meta-xylenol (7 mgs), and the mixture further stirred. The coating thus produced was coated onto cardboard using a K-bar coater (speed 4), then dried and tested for antimicrobial activity.

### Example 2

Sodium dodecylbenzenesulfonate [SDBS] (0.25 g) was slurried in water (1 g), then a solution of an maleic acid / methyl vinylether copolymer (0.75 g) [Gantrez HSU] added, followed by a commercial water based acrylic sealer (4.5 g) [HRM45, Shiva, India]. The mixture was stirred until the SDBS dissolved. para-Chloro-meta-xylenol (7 mgs), was added and the mixture further stirred. The coating thus produced was coated onto cardboard using a K-bar coater (speed 4), then dried and tested for antimicrobial activity.

### Example 3

Sodium dodecylsulfate [SDS] (0.25 g) was slurried in water (1 g), then a commercial water based acrylic sealer added (5.4 g) [WBC1100, Ultrachem, UK] and the mixture stirred until the SDS dissolved. Phenoxyethanol (35 mgs) was added, followed by para-chloro-meta-xylenol (7 mgs), and the mixture further stirred. The coating thus produced was coated onto cardboard using a K-bar coater (speed 4), then dried and tested for antimicrobial activity.

### Example 4

To sodium dodecylbenzenesulfonate [SDBS] (0.25 g) was added an aqueous solution of an maleic acid / methyl vinylether copolymer (5.4 g) [Gantrez HSU]. The mixture was stirred until the SDBS dissolved. para-Chloro-meta-xylenol (7 mgs), was added and the mixture further stirred. The coating thus produced was coated onto cardboard using a K-bar coater (speed 4), then dried and tested for antimicrobial activity.

### Microbiology

Treated cardboard samples prepared by method concordant with those above were tested versus a control cardboard coated with a conventional non-biocidal commercial coating, [WBC1100, Ultrachem, UK] against Staph. aureus.

8 cm x 8 cm surfaces of cardboard were inoculated with 100 µl of ca. 1 x 10⁸ cfu of test bacteria which was spread across the whole test surface (for approx. 20 seconds) using a sterile spreader. The test materials were left for the contact time at ambient temperature (20°C). Control material was recovered at time = 0. At the end of the contact time the remaining bacteria on the test surfaces were recovered by swabbing using a sterile cotton swab (woodshaft with cotton tip, single in peel pouch), one soaked in neutralizer and then again with a second dry swab.

The swabs were then placed into 10ml of neutralizer and vortexed. This solution was then enumerated to a dilution of 1 x 10⁶. Following enumeration plates were incubated at 37 °C for 24 hours and colonies counted on each plate to calculate the log reduction of the test material. Testing was performed in duplicate. Test material reduction was compared to control results at the same test time. A negative control was swabbed to ensure sterility of the samples.

A reduction of at least 99.9 % (Log 3) was achieved at 1 hour contact time for the examples 1 and 2 in accordance with the present invention.

## Claims

1. An antimicrobial aqueous sealant, sizing, coating or varnish product comprising:
c) 0.5 to 10wt% aryl or alkyl sulfonate anionic surfactant, preferably 2.5 to 8.5wt%
and
d) 0.1 to 1wt% biocide.

2. The product according to claim 1, wherein the surfactant is an alkyl sulfate such as sodium lauryl sulfate.

3. The product according to claim 1, wherein the surfactant is an aryl sulfonate such as sodium dodecylbenzene sulfonate.

4. The product according to any preceding claim, wherein the biocide comprises a chlorinated phenol type biocide.

5. The product according to claim 4, wherein the biocide is chlorocresol, para-chloro-meta-xylenol, or 5-chloro-2-(4-chlorophenoxy)-phenol(DCPP)

6. The product according to any preceding claim where the biocide comprises an isothiazolinone derivative.

7. The product according to claim 6, wherein the biocide comprises MIT (methylisothiazolinone) or CMIT (chloromethylisothiazolinone).

8. The product according to claims 4 to 6, further incorporating aliphatic alcohol substituted with an aryl moiety.

9. The product according to claim 8, wherein the aliphatic alcohol substituted with an aryl moiety is phenoxyethanol.

10. The product according any preceding claim where the aqueous coating is a solution of a homo or heteropolymer of unsaturated low molecular weight carboxylic acids (or their esters or anhydrides). Example monomers would be acrylic, methacrylic or maleic acids, and example polymers would be the carbomer class, such as acrylic acid homopolymers, or maleic acid / vinyl ether heteropolymers.

11. Use of the product of any preceding claim for packaging.

12. The use according to claim 11 for medical packaging, preferably any of card medium, box packaging, packaging, laminate packaging, paper products, stationery, note pads, medical equipment packaging, medical note paper, prescriptions, pulp screens, consumables or dry paper towels.

13. The use according to claim 11 for general packaging, preferably any of brochures, catalogues, posters, point of sale, flyers, business cards or reports.

14. Use of the product of any of claims 1 to 10 for bank notes or currency.

15. A process for producing an antimicrobial aqueous sealant, sizing, coating or varnish product according to any of claims 1 to 10, wherein an aryl or alky sulfonate anionic surfactant is slurried in water prior to dissolution.
